(19)

**Europäisches Patentamt**
**European Patent Office**
**Office européen des brevets**

(11) **EP 3 913 258 A1**

(12) **EUROPEAN PATENT APPLICATION**

(43) Date of publication:
    **24.11.2021 Bulletin 2021/47**

(51) Int Cl.:
    ***F16H 48/11*** *(2012.01)*    ***F16H 48/36*** *(2012.01)*

(21) Application number: **20176520.3**

(22) Date of filing: **26.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.05.2020  US 202016881028
              22.05.2020  US 202016882323**

(71) Applicants:
 • **Kontopoulos, Leonidas Kyros
   60596 Frankfurt am Main (DE)**

 • **Kontopoulos, Kyros Filippos
   60596 Frankfurt am Main (DE)**
 • **Kontopoulos, Florentina-Magdalena
   60596 Frankfurt am Main (DE)**

(72) Inventors:
 • **Kontopoulos, Grigorios Maximilian
   60596 Frankfurt am Main (DE)**
 • **Kontopoulos, Konstantinos
   60596 Frankfurt am Main (DE)**

(74) Representative: **Keil & Schaafhausen
   Patentanwälte PartGmbB
   Friedrichstraße 2-6
   60323 Frankfurt am Main (DE)**

(54) **VARIABLE TORQUE DIFFERENTIAL**

(57)    The present invention relates to a variable torque differential, and in particular to an automotive differential, for transferring a rotational force from an input member, for example connected to an automotive engine, to a first and a second output member, for example half-shafts of a drive axle of a vehicle. The differential thereby comprises a first gear connected to the first output member, a second gear connected to the second output member, and at least one third gear system comprising gears and freewheel gears.

**Fig. 1**

**Description**

1. Technical field

The present invention relates to a differential, in particular an automotive differential, and a vehicle comprising such a differential.

2. Technical background

When a wheeled vehicle, such as an automobile, turns, an outer wheel (i.e. a wheel travelling around the outside of the turning curve) rotates with greater angular velocity compared to an inner wheel, as the outer wheels have to roll further than the inner wheels. For this purpose, a differential is typically applied which allows for the outer wheel to rotate faster than the inner drive wheel during a turn.

The basic differential is the so-called open differential, by which the torque from an engine is equally divided to each wheel.

Upon turning, the weight of a vehicle such as a car is transferred to the outer wheels. As a result, upon driving turns, the outer wheels can handle increased amount of engine torque.

Various systems have been developed in order to split torque between the wheels so that the outer wheel receives more torque in relation to the inner wheel. The majority of those systems comprise clutch disks.

The present invention, which is a mechanical device, provides a solution according to the subject matter of the independent claims.

3. Summary of the invention

The invention relates to a differential, and in particular to an automotive differential. The differential may thereby allow for transferring a rotational force from an input member (which may be an input shaft or drive shaft connected to an automotive engine) to a first and a second output member (which may be half-shafts of a drive axle). The differential may also be provided in form of a central differential in AWD or 4WD vehicles , to distribute torques/rotational forces between the front and rear axle.

An exemplary configuration of the variable torque differential, comprises a first gear connected to the first output member, and a second gear connected to the second output member. The first and the second gears are connected in a rotationally fixed manner to the respective output members. Further, the differential comprises at least one third gear system.

The first gear, the second gear and the third gear system form a planetary gear system wherein the first and the second gears form sun gears of the system and the third gear system forms the planetary gear of the system .

The third gear system comprises two gear complex members (sub gear system). Each gear complex member comprises two gears and one freewheel gear, with the freewheel gear being mounted on one edge of the assigned planetary shaft.

The gears and the freewheel gear of each gear complex member are connected in a rotationally fixed manner and have a common axis. As it is obvious the gears rotate and transfer torque in both directions and the freewheel gears can rotate freely in one direction without transferring any torque.

The first gear of the two gears of each gear complex member is engaged with the assigned sun gear and it is mounted in between the second gear and the freewheel gear.

The second gear of the two gears of each gear complex member is positioned in the other end of the gear complex member (therefore the one end of the gear complex member comprises a freewheel gear and the other a gear) and engages with a freewheel gear of the second gear complex member.

The freewheel gear of the one gear complex member and the second gear of the other gear complex member that is engaged with, have different number of gear teeth with a chosen gear ratio greater than one (gear ratio > 1). In the exemplary configuration, the gear is the driver gear and the freewheel gear is the driven gear. It is going without saying, that the freewheel gear can be the driver gear and the second gear of the gear complex member the driven gear, but always the driver gear should have fewer gear teeth in relation to the driven gear, when the vehicle is moving forward.

The differential further comprises a housing which is engaged by an input member. For example, when the differential is used in a vehicle the housing receives power from the engine via the drive gear. As the housing rotates, the rotational force is transferred to the third gear system, and from there to the output members due to the engagement between the first and second gears with the third gear system. It is going without saying that the differential may comprise more than one third gear systems.

When a vehicle takes a turn, the gear of the gear complex member that is engaged with the sun gear of the inner wheel, rotates around the axis of the gear complex member (spins) and as a result the second gear of the same gear complex member becomes driver gear.

The driver gear, forces the freewheel gear of the other gear complex member (driven gear) which is engaged with, to rotate.

In this exemplary configuration the freewheel gear engage (locks) when becomes driven gear while when its axle becomes driver gear rotates free.

Since the driven gear has more gear teeth in relation to the driver gear (the chosen gear ratio is greater than one), the gear of the gear complex member that is engaged with the sun gear of the outer wheel is forced to rotate with greater rotational force according to the chosen gear ratio) in comparison to the force that rotates the sun gear of the inner wheel, as will be explained in more details further on.

As a result a greater torque is applied to the outer wheel, in comparison to the torque applied to the inner wheel.

As it is well known, when a vehicle takes a turn, the front outer wheel rotates faster than the rear inner wheel and the front inner wheel faster than the rear inner wheel. As a result the gear of the gear complex member that is engaged with the sun gear that transfers torque in the rear differential becomes a driver gear.

Therefore the proposed differential can be used as a central differential in AWD and 4WD vehicles, providing more torque in the front axle when a vehicle turns while moving forward, improving safety.

As a person skilled in the art understands, when the vehicle moves in a straight line, the differential "locks" because both gears of the gear complex members become driver gears.

The gears provided on the ends of the one planetary shaft of the gear complex member of the third gear system, engage with the corresponding gears of the other planetary shaft of the other gear complex member. As a result rotational motion from one gear complex member can be transferred to the other gear complex member.

Therefore, due to geometry, on the same side of the planetary shafts of each gear complex member, a "big" gear (more gear teeth) engages with a "small" gear (fewer gear teeth).

Therefore the "big" freewheel gears are diagonally opposed to each other and so are the "small" gears.

The freewheel gears are provided having more gear teeth in relation to the gears they mesh with.

Since all gears supported by the planetary shafts are torque proof connected to the planetary shafts, when one of the gears supported by the respective planetary shaft rotates at an angle "a" all of the gears supported by the same planetary shaft rotate at an angle 'a' as well.

In addition since the gears that are engaged between the planetary shafts have different numbers of gear teeth in relation to each other, different torques are transferred to the output members.

All of the previously mentioned gears and freewheel gears are housed within a housing that receives power from an input member. For example when used in a vehicle, the housing receives power from an engine via a drive gear.

As a result when the housing rotates, the third gear rotate as well and due to the engagement of the third gear with the first and second gears (sun gears), motion is transferred to the output members.

As mentioned before freewheel gears, by definition, transfer torque only in one direction of rotation while in the other direction rotate free.

Therefore depending on the direction of turning of the vehicle, only one freewheel gear of the third gear engaged (lock) while the other rotates free.

In the above described configurations of the differential, the gears of the third gear system that mesh with freewheel gears become driver gears when a vehicle turns while moving forward . Its without saying that freewheel gear could be the driver gear and the assigned gear the driven gear. But always the gear with the fewer gear teeth is the driver gear.

When the vehicle drives backwards while turning the inner wheel transfers more torque than the outer wheel which rotates faster than inner wheel.

An alternative of the invention is a spur gear variable torque differential in which the the at least one third gear system comprises two gear complex members.

Its without saying that the differential could comprise more third gear systems.

Each gear complex member comprises a freewheel gear, a gear which is combined in a coaxial manner with the freewheel gear and a gear that meshes with the freewheel gear of the same gear complex member .

The gears of each gear complex member mesh with the assigned sun gears .

The gear and the freewheel gear of each gear complex member that mesh with each other have different number of gear teeth in relation to each other.

Freewheel gears, by definition, transfer torque only in one direction of rotation . When a vehicle turns while is moving forward, freewheel gear could engage (lock) when it becomes driver gear (then has fewer teeth than the gear is engaged with) or could engage (lock) when it becomes driven gear (then has more teeth than the gear is engaged with) .

As the housing rotates, the rotational force is transferred to the third gear system, and from there to the output members due to the engagement between the first and second gears (sun gears) with the third gear system.

Depending on the direction of turning of the vehicle while moving forward, different gear complex member becomes "active" transferring torque, while the other gear complex member becomes "inactive" since its freewheel gear rotates freely.

As a person skilled in the art understands the operation of the presented alternative differential is analogous to the previous presented.

Further on other alternative configurations will be presented in detail.

Those are following the principles of the invention , that , depending on the direction a vehicle turns while moving forward, different gear complex member of the third gear system becomes "active" transferring rotational force to the sun gears , and, its gear with fewer teeth is the driver gear , while the other gear complex member is becoming "inactive" since its freewheel gear rotates freely.

As a person skilled in the art understands that, the first and the second gears (sun gears) have an identical number of teeth. The planet gears which are engaged with the sun gears have also an identical number of teeth. The gear that plays the rol of driver gear has fewer teeth than the gear that it is engaged with. All gears have the same gear teeth module .Its possible to have different gear teeth module but in this case in the alternatives configurations the planet gears should have two distinct parts with different gear module.

The sun gears and the planet gears of the invention that are engaged with could have helical gear teeth with mirror symmetrical structure. If friction discs are inserted between the sun gears and the housing wall, the increased friction generates a locking effect.

In a limited slip differential the slower rotating wheel receives more torque than the faster rotating wheel.So when a vehicle turns especially on a slippery road the inner wheel could spin.

Since according to my invention the torque can be splited unequally to semi axles and faster rotating wheel can receive more torque than slower rotating wheel, this problem can be overcomed .

The present invention allows for easier and safer driving, and the ability to take turns faster, improved economy and less tire wear with different torques applied to different drive wheels. When the present invention used in an AWD or in a 4WD vehicle as a central differential allows for safer and faster driving by distributing more torque in the front differential while the vehicle turns. By providing three differentials according to the present invention, each wheel of an AWD or 4WD vehicle can be provided with an individual torque in each wheel.

4. Description of preferred embodiments

In the following, the present invention will be described with reference to the figures. Therein, similar elements are provided with same reference numbers. It shows:

Figure 1            individual parts of a differential according to the present invention;

Figure 2            a differential according to the present invention;

Figure 3            a section cut of a differential according to the embodiment illustrated in Fig. 2;

Figure 4            gives a schematic illustration of the forces acting on the gears according to the present invention;

Figure 5            an alternative configuration according to the present invention;

Figure 6            an alternative configuration according to the present invention;

Figure 7            gives a schematic illustration of the forces acting on the gears according to the present invention;

Figure 8            an alternative configuration according to the present invention;

Figure 9 to 12     individual parts of a differential according to the present invention.

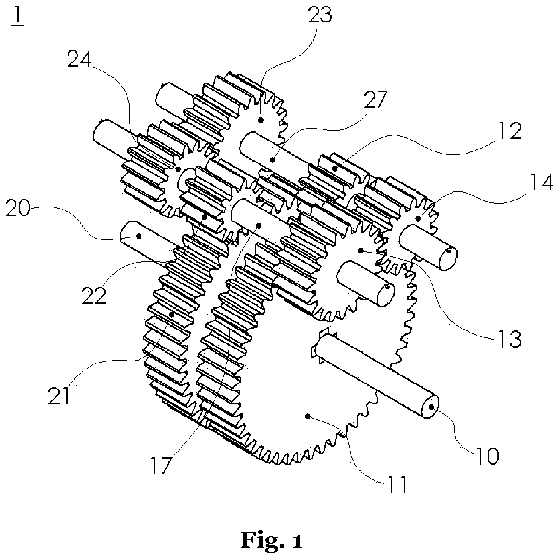

Fig. 1 illustrates individual parts of a differential 1 according to the present invention and in particular the layout of the gears inside the proposed differential 1.

As can be seen the proposed variable torque differential 1 comprises a first gear 11 which is torque proof connected to the assigned output member 10 and a second gear 21 which is torque proof connected to output member 20.

The third gear system is consisted by two gear complex members, with each gear complex member being consisted by a shaft and three gears being supported by the shaft.

The one gear complex member comprises planetary shaft 17, and the other comprises planetary shaft 27, with each planetary shaft supporting gears which are torque proof connected to the assigned shaft.

As a result planetary shaft 17 supports gears 22, 24 and freewheel gear 13, and planetary shaft 27 supports gears 12, 14 and freewheel gear 23.

The first gear 11, the second gear 21 and the third gear system, form a sun and planet gear system with the first and second gears 11, 21 being the sun gears and the gears of the third gear system being the planetary gears.

Gear 12 meshes with the assigned first gear 11 and gear 22 meshes with the assigned second gear 21.

Gear 14 and freewheel gear 23 are positioned at the ends of the assigned planetary shaft 27 and freewheel gear 13 and gear 24 are positioned at the ends of the assigned planetary shaft 17.

Gear 14 meshes with the assigned freewheel gear 13 and freewheel gear 23 meshes with the assigned gear 24.

Gears 14 and 24 have less gear teeth in relation to freewheel gears 23, 13. When a vehicle moves forward and turns, gear 14 or gear 24 becomes driver gear and one of the freewheel gear 13 or freewheel gear 23 driven gear while the other rotates free.

All of the supported gears in both planetary shafts 17, 27 are torque proof connected to the assigned shaft. The torque proof connection of the freewheel gears with their assigned planetary shafts 17, 27 is established only for a certain direction of rotation (by definition).

In other words each of the freewheel gears can transfer torque only for one direction of rotation.

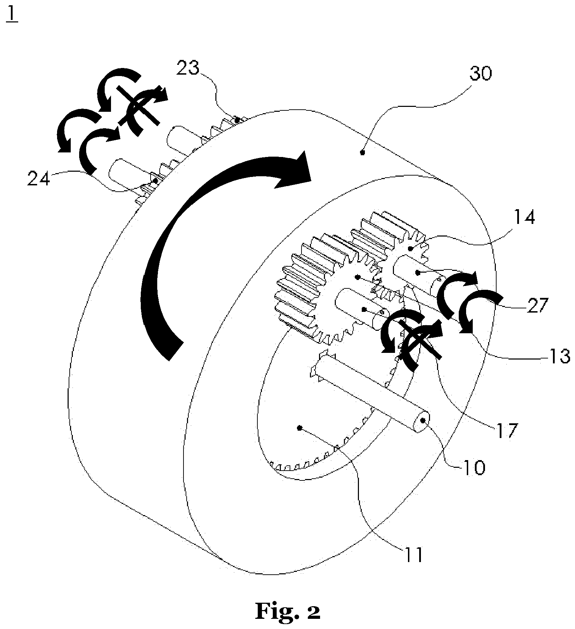

In figure 2 the individual components presented in figure 1 are presented as being received in a housing 30. In addition black arrows are presented by which the direction of rotation of certain parts is presented, while a vehicle moves forward.

The black arrows presented in this figure, represent the rotation of certain individual parts of the differential 1.

Therefore for a given rotation as shown with the big black arrow on top of the housing 30 while the vehicle moves forward, the gears 14, 24 and the freewheel gears 13, 23 have the ability to rotate as the respective black arrows.

Therefore gears 14, 24 can rotate with the same direction of rotation as the housing 30 and with the opposite direction of rotation. In both these directions of rotation, gears 14, 24 can transfer torque.

In contrast, freewheel gears 13, 23 do not transfer torque in both directions of rotation (it is a principle feature of a freewheel gear).

As can be seen by the crossed out arrows, the freewheel gears 13, 23 rotate free when they rotate in the direction of rotation of the housing 30. In contrast when they rotate in reverse direction in comparison to the rotation of the housing 30, they do engage (transfer torque).

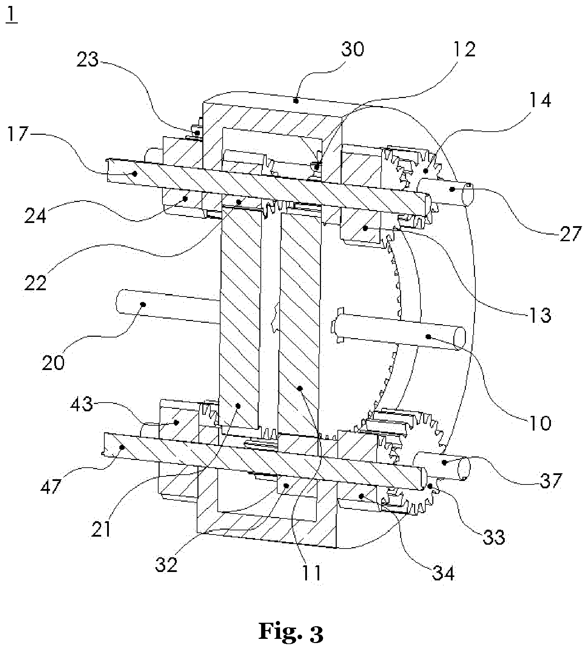

In figure 3 a section cut of an exemplary configuration of a differential comprising two third gear systems is presented.

As mentioned before additional third gear systems can be included.

In this figure, the support of the planetary shafts 17, 37, 27, 47 can be seen in the sides of the housing 30 in respective cavities.

As it is obvious the housing 30, supports the planetary shafts 17, 37, 27, 47 and as a consequence the two third gear systems. As the housing 30 rotates, forces are transferred from the housing 30 to the third gear systems and from there to the assigned sun gears 11, 21 and finally to the output members 10, 20.

The layout of the third gear systems of this configuration is analogous to the one presented in detail in the previous figures.

It is going without saying that this configuration is exemplary and others can be adopted obeying the basic principles of the design.

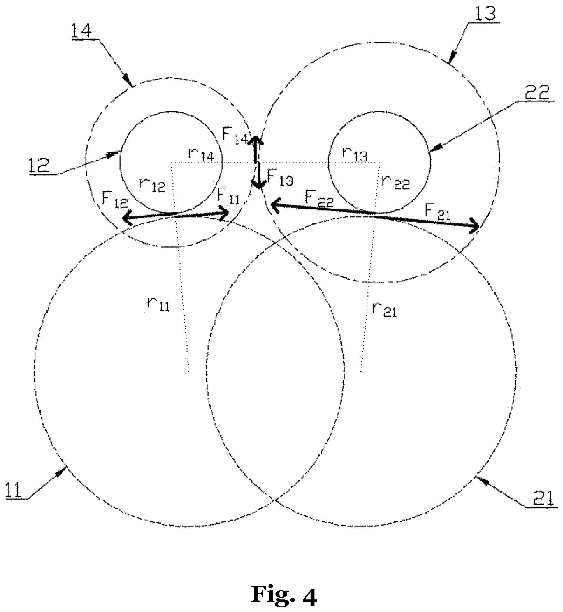

In figure 4 a schematic illustration of circumferential forces acting on the gears, when a vehicle turns, with the output member 10 being the inner output member, according to the present invention can be seen.

Sun gears 11, 21 are not illustrated as being coaxial for visual purposes.

In this schematic illustration gear rolling cycles and circumferential forces acting in gears, freewheel gears and sun gears while a vehicle takes a turn and sun gear 11 is being connected with inner wheel are shown, with the circumferential forces being presented as arrows.

The circumferential force $F_{12}$ is equal to the circumferential force $F_{11}$. Therefore: $F_{12} = F_{11}$ (i)

The equilibrium of torques around the axis (planetary shaft) 27 of rotation is zero ($\Sigma M = 0$). As result

$$F14 * r_{14} = F_{12} * r_{12} => F_{14} = \frac{F_{12} * r_{12}}{r_{14}} \quad \text{(ii)}$$

Force $F_{14}$ is equal to force $F_{13}$ => $F_{14} = F_{13}$ (iii)

The equilibrium of torques around the axis 17 of rotation is zero ($\Sigma M = 0$).

$$F_{13} * r_{13} = F_{22} * r_{22} => F_{22} = \frac{F_{13} * r_{13}}{r_{22}} \quad \text{(iv)}$$

As a result

The circumferential force $F_{21}$ is equal to the circumferential force $F_{22}$. Therefore: $F_{21} = F_{22}$ (v)

$$F_{21} = \frac{F_{13} * r_{13}}{r_{22}} \quad \text{(vi)}$$

By using the equation (v) in the equation (iv) we have:

$$F_{21} = \frac{F_{14} * r_{13}}{r_{22}} \quad \text{(vii)}$$

By using the equation (iii) in the equation (vi) we have:

$$F_{21} = \frac{F_{12} * r_{12} * r_{13}}{r_{14} * r_{22}} \quad \text{(viii)}$$

By using the equation (ii) in the equation (vii) we have:

But planetary gears 12, 22 have the same radii. Therefore: r22 = r12 (ix)

$$F_{21} = \frac{F_{12} * r_{13}}{r_{14}} \quad \text{(x)}$$

By using the equation (ix) in the equation (viii) we have:

$$F_{21} = \frac{F_{11} * r_{13}}{r_{14}} \quad \text{(xi)}$$

By using the equation (i) in the equation (x) we have:

Since by design, the rolling cycle diameter of gear 13 (freewheel gear 13 has more teeth than gear 14) is increased in relation to the diameter of teeth rolling cycle of gear (has less teeth) 14 => $r_{13}$ > $r_{14}$ (gear ratio >1)

$$F_{21} > F_{11} \quad \text{(xii)}$$

Gear 23 is a freewheel gear and rotates free in this direction $F_{23}$ = $F_{24}$ = 0 (xiii) so its not shown .The torque applied to gear 21 is greater than the torque applied to gear 11 according to the chosen gear ratio : $M_{21}$ =$r_{21}$ * $F_{21}$ > $M_{11}$=$r_{11}$ * $F_{11}$ (xiv)

From the above it is made clear that when a vehicle moves and turns the torque split between the output members 10, 20 varies, with greater torque being assigned to the output member 20, which also rotates faster than output member 10.

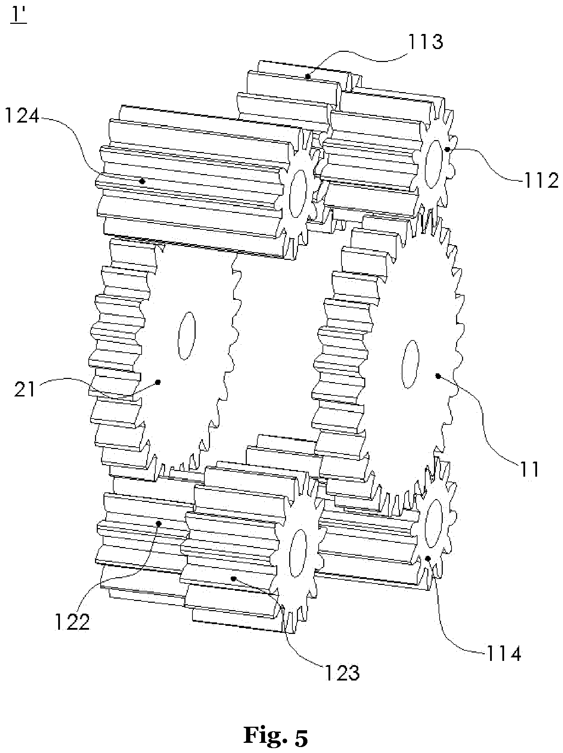

In figure 5 an alternative exemplary figure of differential (1) is being presented and more particular a spur gear differential where the third gear system comprises two gear complex members.

Its without saying that the differential could comprise more third gear systems.

Each gear complex member (50') comprises a freewheel gear (113, 123), a gear (112, 122) which is combined in a rotational fix manner and in a coaxial manner with the freewheel gear (113, 123) and a gear (114, 124) that meshes with the freewheel gear (113, 123) of the same gear complex member (50').

The gears (112, 114, 122, 124) of each gear complex member (50) mesh with the assigned sun gears (11, 21).

The gear (114, 124) and the freewheel gear (113, 123) of each gear complex member (50) that mesh with each other have different number of gear teeth in relation to each other.

Since freewheel gears, by definition, transfer torque only in one direction of rotation and freewheel gear (113,123) has more teeth than gear (114,124), freewheel gear (113,123), by design should engage when are becoming driven gear when a vehicle turns while is moving forward.

As the housing rotates, the rotational force is transferred to the third gear system, and from there to the output members due to the engagement between the first and second gears (sun gears) with the third gear system.

Depending on the direction a vehicle turns while moving forward, different gear complex member becomes "active" transferring torque, while the other gear complex member becomes "inactive" since its freewheel gear rotates freely.

As a person skilled in the art understands the operation of the presented alternative differential is analogous to the previous presented.

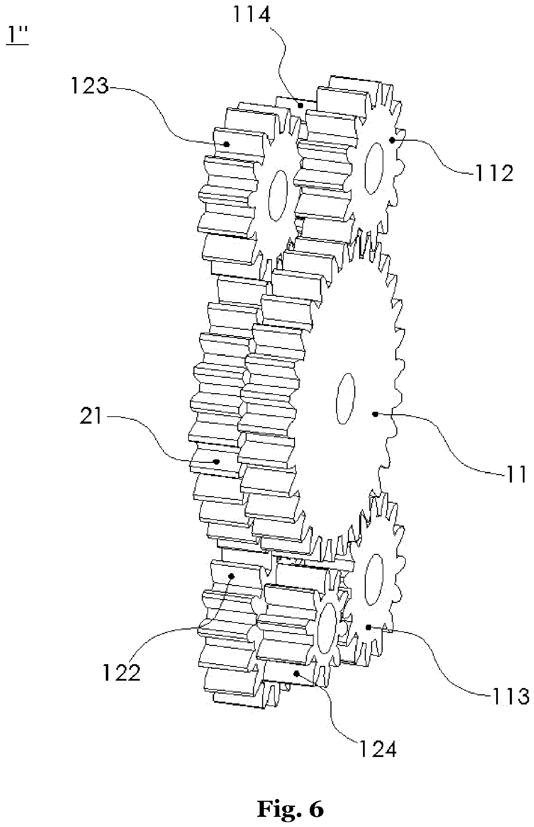

In fig 6 an alternative exemplary figure of differential (1) is being presented and more particular a spur gear differential, being a close match with the presented one in fig.5.

In this exemplary configuration the axial distance between the sun gears can be minimized.

Each gear complex member (50") comprises a freewheel gear (113, 123), a gear (114,124) which is combined (torque proof connected) in a coaxial manner with the gear (112, 122). The gear (114,124) meshes with the freewheel gear (113,123) of the same gear complex member (50").

The gears (112, 122) of the one gear complex member (50") and the freewheel gear (113, 123) of the other gear complex member (50") mesh with the assigned sun gears (11, 21).

The gear (114, 124) and the freewheel gear (123, 113) of each gear complex member (50") that mesh with each other have different number of gear teeth in relation to each other.

Since in this configuration gear (112,122) is the driver gear when a a vehicle turns while moving forward, the gear (114,124) has fewer teeth than the freewheel gear (123, 113).

Depending on the chosen gear ratio (z113/z124, z123/z114) and if needed to ensure that teeth of gear (114,124) are not meshed with teeth of sun gear (21,11) the gear tooth profile of gear (114,124) could be subjected to a negative displacement . Also gear tooth profile of gears (112,122) and gear tooth profile of gears (113,123) could be subjected to positive displacement.

Depending on the direction a vehicle turns while moving forward, different gear complex member becomes "active" transferring torque, while the other gear complex member becomes "inactive" since its freewheel gear rotates freely.

Freewheel gears, by definition, transfer torque only in one direction of rotation . Depending on the direction a vehicle turns while moving forward, freewheel gear (113,123) engage when they are becoming driven gear.

Its without saying that gear (112,122) could be freewheel gears instead of gears (113,123).

As a person skilled in the art understands the operation of the presented alternative differential is identical to the previous presented.

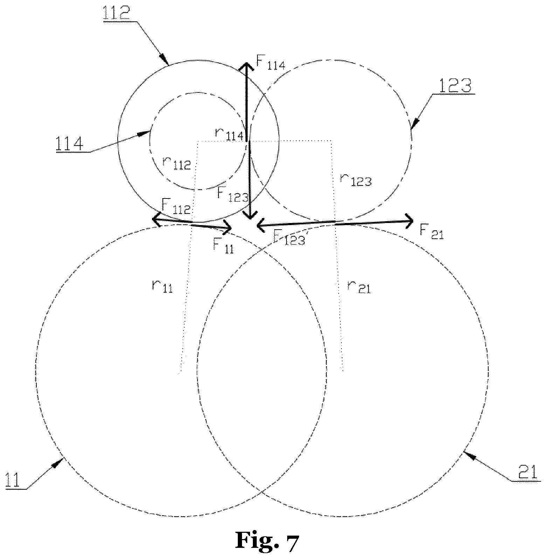

In figure 7 a schematic illustration of circumferential forces acting on the gears, when a vehicle turns, with the output member 10 being the output member of the inner wheel, according to exemplary differential (1) of fig.6 can be seen.

In this schematic illustration gear rolling cycles and circumferential forces acting in gears, freewheel gears and sun gears are shown, with the circumferential forces being presented as arrows.

This illustration is analogous to the one presented in figure 4 and as in figure 4, sun gears 11, 21 are not illustrated as being coaxial for visual purposes.

$$F_{11} = F_{112} \text{ and } F_{114} = \frac{F_{112}*r_{112}}{r_{114}}$$

$F_{114} = F_{123}$ and $F_{123} = F_{123}$, and $F_{21} = F_{123}$,

From the above equations :

$$F_{21} = \frac{F_{11}*r_{112}}{r_{114}} = F_{11} * \frac{z_{112}}{z_{114}} \text{ and as far as } \frac{z_{112}}{z_{114}} > 1 => F_{21} > F_{11}$$

From the above it is made clear that when a vehicle moves and turns the torque split between the output members 10, 20 varies, with greater torque being assigned to the output member 20, which also rotates faster than output member 10.

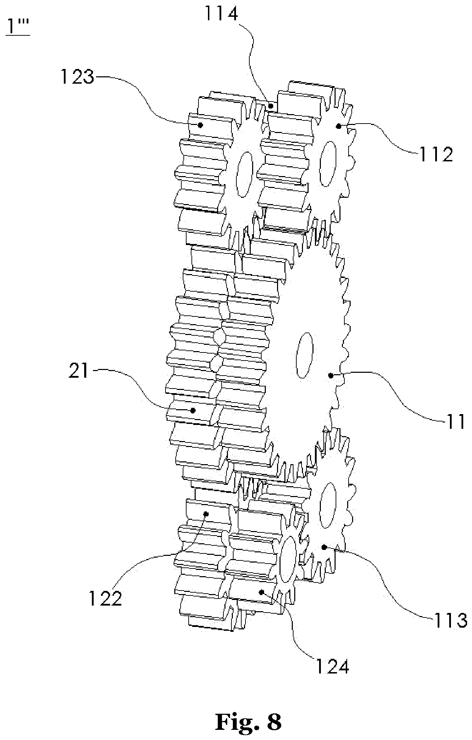

In fig.8 an alternative exemplary figure of differential (1) is being presented and more particular a spur gear differential, being a close match with Schaeflers lightweight differential and the one presented in fig. 6 .

Gear teeth profile of sun gear (11) is subject to negative displacement and gear teeth profile of sun gear (21) is subject to positive displacement. As a coincidence, the diameter of sun gear (21) is bigger than the diameter of sun gear (11).

In this exemplary configuration the axial distance between the sun gears is again being minimized.

The at least one third gear is engaged with sun gear (11,21) as described in fig.6 .

As a person skilled in the art understands , the operation of the presented alternative differential is identical to the previously presented.

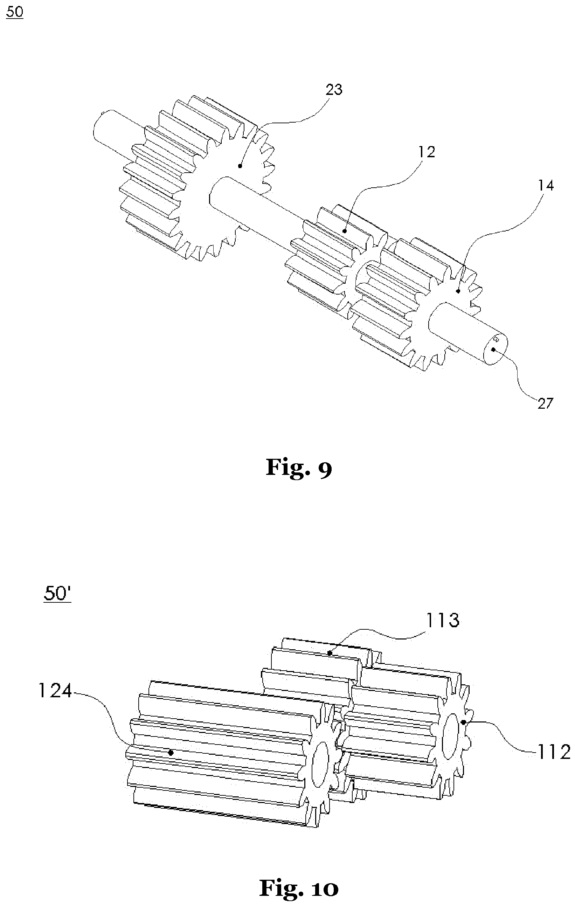

In the following figures 9 to 11 the gear complex members of each of the presented exemplary configurations of the previous figures are presented.

More specifically figure 9 presents a gear complex member (50) found in the configurations presented in figure 1 to figure 4.

This gear complex member comprises coaxially placed gears, with all of them being supported by a planetary shaft (planetary shaft 27) and being torque proof connected to the assigned planetary shaft.

As mentioned before freewheel gears, by definition, transfer torque only in one direction of rotation.

Among the two gears and the freewheel gear of the gear complex member , one gear engages with a sun gear and the other gear with the freewheel gear of the other gear complex member.

According to the principles of the invention, the gear and the freewheel gear of each gear complex member that engage with have different number of gear teeth in relation to each other.

In figure 10 we can see the gear complex member (50') of the alternative configuration presented in figure 5.

Following the principle of the invention the gear complex member comprises a freewheel gear that engages with a gear that has different number of gear teeth in relation to the freewheel gear.

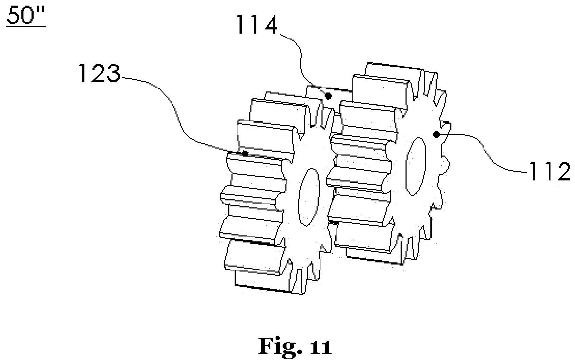

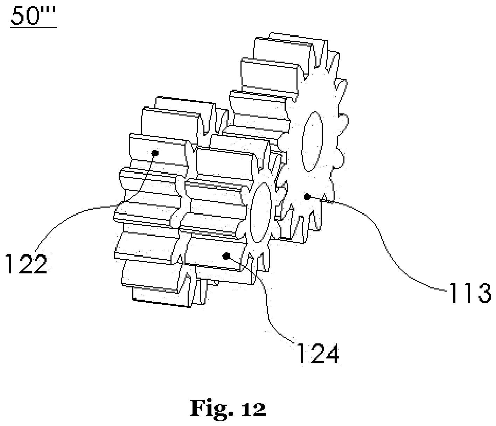

In figure 11 and in fig 12 we can see the gear complex member (50) of the alternative configuration presented in figure 6 and 8.

Following the principle of the invention the gear complex member comprises a freewheel gear that engages with a gear that has different number of gear teeth in relation to the freewheel gear.

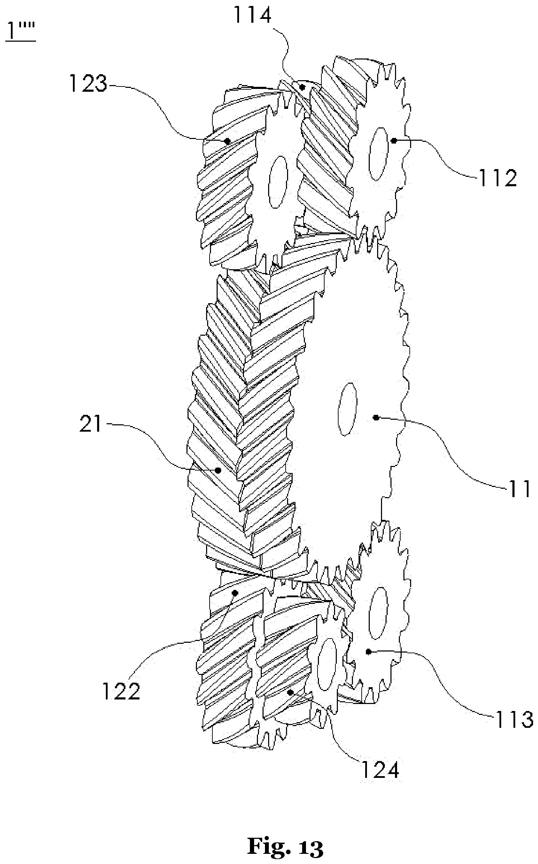

In figure 13 we can see the sun gears and the planet gears of the invention that are engaged with having helical gear teeth with mirror symmetrical structure. If friction discs are inserted between the sun gears and the housing wall , the increased friction generates a limited slip differential.

As a person skilled in the arts understands , among the gears of the third gear system that mesh with each other, the gear with the fewer gear teeth should be the driver gear when the vehicle turns while moves forward , either the gear with the fewer gear teeth or the gear with the more gear teeth of the two is a freewheel gear.

LIST OF REFERENCE SIGNS

| | |
|---|---|
| 1 | differential |
| 10 | output member |
| 11 | first gear / sun gear |
| 12 | gear / planetary gear |
| 13 | freewheel gear |
| 14 | gear |
| 17 | planetary shaft |
| 20 | output member |
| 21 | second gear / sun gear |
| 22 | gear / planetary gear |
| 23 | freewheel gear |
| 24 | gear |
| 27 | planetary shaft |
| 30 | housing |
| 32 | gear / planetary gear |
| 33 | freewheel gear |
| 34 | gear |
| 37 | planetary shaft |
| 43 | freewheel gear |
| 47 | planetary shaft |
| 50 | gear complex member |
| 112 | gear / planetary gear |
| 113 | freewheel gear |
| 114 | gear / planetary gear |
| 122 | gear / planetary gear |
| 123 | freewheel gear |
| 124 | gear / planetary gear |

**Claims**

1. Differential, in particular an automotive differential, for transferring a rotational force from an input member to a first and a second output member, comprising:

   a first gear connected to the first output member;
   a second gear connected to the second output member; and
   at least one third gear system engaging both the first and second gears, wherein the third gear system comprises gears and freewheel gears.

2. The differential according to claim 1,
   wherein the first gear, the second gear and the third gear system form a sun and planetary gear system;
   wherein the third gear system is provided as a planetary gear, and
   wherein the first gear and the second gear are provided as sun gears.

3. The differential according to claims 1 and 2, further comprising a housing engageable by the input member;

wherein the housing supports the at least one third gear system;

wherein the at least one third gear system comprises a first gear complex member and a second gear complex member.

4. The differential according to claim 3

wherein each gear complex member comprises two gears, with each gear meshing with the assigned sun gear, and a gear that is positioned in a coaxial manner in relation to one of the two gears and meshes with the respected other gear;

wherein one of the comprised three gears is provided as a freewheel gear;

wherein the gears that mesh with each other have different number of gear teeth in relation to each other.

5. The differential according to claims 3

wherein each gear complex member comprises a first gear, a second gear and a freewheel gear;

wherein the first gear of each gear complex member, meshes with the assigned sun gears;

wherein the second gear of each gear complex member meshes with the assigned freewheel gear of the other gear complex member;

wherein the second gear of a gear complex member and the assigned meshed freewheel gear have different number of gear teeth in relation to each other.

6. Vehicle comprising a differential according to any one of claims 1 to 5.

**Fig. 1**

**Fig. 2**

**Fig. 3**

**Fig. 4**

1'

113

124

112

21

11

122

123

114

**Fig. 5**

**Fig. 6**

**Fig. 7**

**Fig. 8**

50

**Fig. 9**

50'

**Fig. 10**

50"

123

114

112

**Fig. 11**

50'''

**Fig. 12**

**Fig. 13**

Europäisches
Patentamt

European
Patent Office

Office européen
des brevets

# EUROPEAN SEARCH REPORT

Application Number

EP 20 17 6520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 566 865 A1 (HENRY MAX [FR]) 3 January 1986 (1986-01-03) | 1-3,6 | INV. F16H48/11 F16H48/36 |
| Y | * page 1, line 1 - page 6, line 12 * | 4 | |
| A | * figures 1-3 * | 5 | |
| | ----- | | |
| X | FR 2 530 765 A1 (GRANDCLER JACQUELINE [FR]) 27 January 1984 (1984-01-27) | 1,3,6 | |
| A | * page 1, line 4 - page 3, line 13 * * figures 1, 2, 3, 4 * | 2,4,5 | |
| | ----- | | |
| X | DE 32 14 488 A1 (HEESCH DIETER) 31 March 1983 (1983-03-31) | 1,3,6 | |
| A | * page 1, line 3 - page 5, line 30 * * figures 1-4 * | 2,4,5 | |
| | ----- | | |
| X | DE 10 2014 223017 A1 (SCHAEFFLER TECHNOLOGIES AG [DE]) 12 May 2016 (2016-05-12) | 1,3,6 | |
| A | * paragraphs [0001] - [0013] * * figure 1 * | 2,4,5 | |
| | ----- | | TECHNICAL FIELDS SEARCHED (IPC) |
| X | EP 0 913 603 A1 (SCHLAUBITZ PHILIPPE [CH]) 6 May 1999 (1999-05-06) | 1,6 | F16H |
| Y | * paragraphs [0007] - [0016] * | 4 | |
| A | * figures 1, 2 * | 2,3,5 | |
| | ----- | | |

The present search report has been drawn up for all claims

| Place of search | Date of completion of the search | Examiner |
|---|---|---|
| Munich | 8 September 2020 | Ehrsam, Adrian |

## ANNEX TO THE EUROPEAN SEARCH REPORT
## ON EUROPEAN PATENT APPLICATION NO.

EP 20 17 6520

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2020

| Patent document cited in search report | | Publication date | Patent family member(s) | | Publication date |
|---|---|---|---|---|---|
| FR 2566865 | A1 | 03-01-1986 | EP<br>FR<br>JP<br>WO | 0187793 A1<br>2566865 A1<br>S61502904 A<br>8600381 A1 | 23-07-1986<br>03-01-1986<br>11-12-1986<br>16-01-1986 |
| FR 2530765 | A1 | 27-01-1984 | NONE | | |
| DE 3214488 | A1 | 31-03-1983 | NONE | | |
| DE 102014223017 | A1 | 12-05-2016 | NONE | | |
| EP 0913603 | A1 | 06-05-1999 | NONE | | |

EPO FORM P0459

For more details about this annex : see Official Journal of the European Patent Office, No. 12/82